# EUROPEAN PATENT SPECIFICATION

(11) **EP 3 395 609 B1**
(45) Date of publication and mention of the grant of the patent: **27.05.2020**
(21) Application number: 17461528.6
(22) Date of filing: 27.04.2017
(51) Int. Cl.: B60N 2/28, B62B 7/02

(54) **CHILD CAR SEAT**
KINDERSITZ FÜR FAHRZEUGE
SIÈGE AUTO POUR ENFANT

(43) Date of publication of application: 31.10.2018
(73) Proprietor: Napiorkowski, Stanislaw, 02-548 Warszawa (PL)
(72) Inventor: Napiorkowski, Stanislaw, 02-548 Warszawa (PL)
(74) Representative: AOMB Polska Sp. z.o.o.

(56) References cited:
- CA-A1- 2 833 830
- DE-A1-102012 017 590
- GB-A- 2 451 830
- US-A1- 2007 278 756
- US-B1- 7 311 353

## Description

The object of the invention is a child car seat. More particularly, the invention relates to the car seat equipped with wheels and a handle, which facilitates guiding such a car seat with one hand, in such a way that the child is rearward to the direction of the movement and facing the person guiding the car seat.

Child car seats and strollers are essential for transporting young children by various means of communication. Various constructions of this type are known.

In the prior art US patent US9308839B1 is known, which discloses a device combining functions of a car seat and a stroller. This device includes a fixed telescopic handle mounted on the back of the car seat backrest. The solution suggests pulling the stroller behind. Positioning of the wheels at the front of the seat makes it impossible during the normal use of the said invention to set position of the child facing parent. Moreover, in such solution there is a risk of the child falling out of the car seat, and while carelessly using base part of the car seat can rub against the ground.

Other patent application US20040239079A1 provides a similar solution to the aforementioned one, except that the wheels are mounted in the area of the rear wall and the car seat base joint.

Also known is the patent application DE102010005650A1, which illustrates a typical stroller that has a single collapsible handle fixed in the front part of the seat, and which ends with a handle for guiding the stroller using one or both hands. The stroller is designed for pulling. The said device is not a car seat, while the handle, mounted at the front of the stroller, is mounted permanently.

The European patent EP2219932B1 describes a variant of a car seat, which is converted into a stroller by mounting it on a rack that has a large guiding handle and two axis fitted with wheels. After mounting the seat on the rack a visual contact between the family/caregiver guiding the strolled with the child in the seat is possible. The seat itself (i.e. the device which is used to transport a child in the vehicle) does not have wheels in its construction, or even more, the handle designed to guide (push) the child's seat on the ground. Therefore, if the device needs to be used as a stroller - a rack that takes up unnecessary amount of space has to be used.

The patent application CA2833830A1 provides infant car seat with two wheels which are mounted in the seat's plastic case and expandable handle on the hull to allow the user to roll the seat. The handle is mounted to the rear portion of the backrest of the infant car seat.

From the point of view of safety and correct development of the child, there is still a problem with positioning the child backward to the parent in the current car seat solutions. Structures that attempt to solve this problem involve the use of additional elements, often of considerable size, with dimensions or complexity exceeding the seat itself (e.g, racks, chassis), by which the car seat takes the form of a baby stroller. Therefore, the present invention aims to provide a car seat, especially designed for travelling with a child, with a simple construction and where the child would be seated facing the parent.

Due to seating the child facing the parent it is possible to provide adequate child protection and respond quickly to their needs. Moreover, from a psychological point of view, visual contact helps in developing bonds between a child and a parent, which is very important in early childhood. Additionally, the invention aims to provide a seat which may be guided using a handle of such shape and position to provide the most anatomical position of the hand while guiding the seat. Another important issue is providing the safety of the child. Carrying a child so low (near the ground) is risky - dog can easily run up the seat, something may fall into it. Visual contact with the child is necessary to ensure safety in such a way of moving with the child.

A child car seat with a housing that surrounds the backrest and a seat and a handle allowing to guide the car seat, is characterized in that having
a) at least two wheels mounted on the axis around which they can rotate, the axis extending at least partly through the car seat housing,
b) a handle with a grip for pushing the car seat in front of oneself on the ground,
wherein the handle with the grip is a single stick-shaped element is characterized in that
said handle with the grip is mounted to the seat of the car seat, from below, further away from the backrest and directed in this direction,
the handle being so configured and located relative to the axis that in normal use the centre of gravity of the car seat with a handle is between the handle grip and the axis.

Preferably, the wheels are mounted to the car seat housing near the seat and car seat backrest joint.

Preferably, the wheels have bearings.

Preferably, the wheels are mounted in the housing by a snap-on mounting, preferably each of them separately.

Preferably, the wheels are mounted on a common axis.

Preferably, the wheels are located on a common axis with a differential, with each wheel being connected to the axis with the homokinetic joint and the axis being provided with a wheel-turning mechanism which is connected to the handle and/or grip.

Preferably, the handle is rotary mounted to the car seat, while inside the handle there are elements connecting the rotating grip with a wheel-turning mechanism.

Preferably, the handle is connected to the car seat detachably, especially snap-on, press fit, thread or with an additional fastener such as a screw, bolt or pin.

Preferably, the handle is mounted closer to the right or left side of the car seat.

Preferably, the handle is selected from a group comprising: a straight, uniform handle, preferably made of one piece of material; folding handle made of several segments, connected by a spring line placed inside; folding telescopic handle; folding unscrewing handle; handle extended from the inside of the seat housing; like in suitcases.

Preferably, the handle extends substantially perpendicular to the axis around which the wheels can rotate.

Preferably, a grip extends substantially along the handle.

Preferably, the car seat is additionally equipped with a wheel casing.

Preferably, the wheels are retractable into the housing of the car.

Preferably, the wheels have inflatable tires.

The invention will now be further illustrated in the preferred embodiment, with reference to the accompanying drawings, in which:

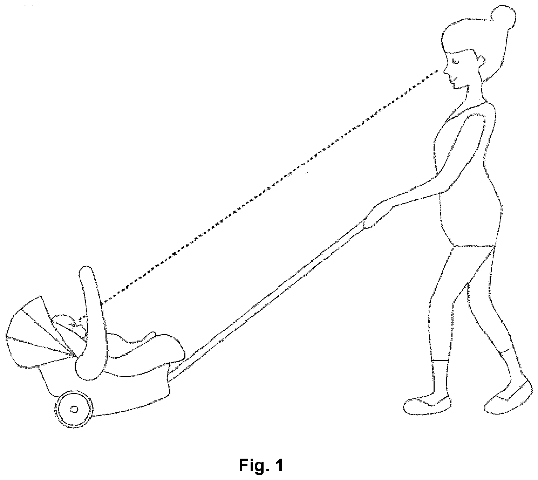

Fig. 1 schematically illustrates the present invention in a preferred embodiment, in normal use, wherein the mother guiding the seat according to the invention and the child seated therein have visual contact;

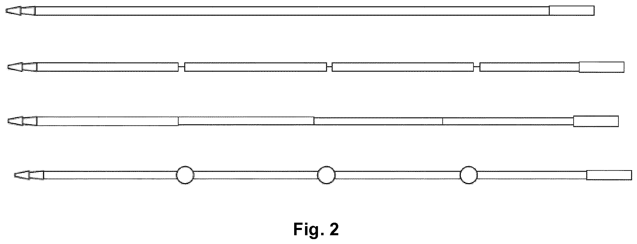

Fig. 2 shows various examples of types of handle which a seat can be provided with according to the present invention (from the top to the bottom: a straight, uniform handle, preferably made of one piece of material; folding handle made of several segments, connected by a spring line placed inside, folding telescopic handle, folding unscrewing handle, handle extended from the inside of the car seat housing, similarly as in the suitcases; each of example handles is provided with a grip);

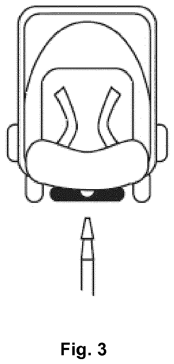

Fig. 3 shows a diagram of mounting the handle to the car seat in an embodiment of the invention;
Fig. 4 shows various examples of wheels which a car seat can be provided with according to the present invention (from the top to the bottom and from left to right: soft, hard, with an inner tube); and
Fig. 5 shows another way of attaching the wheels in which the tension springs are used.

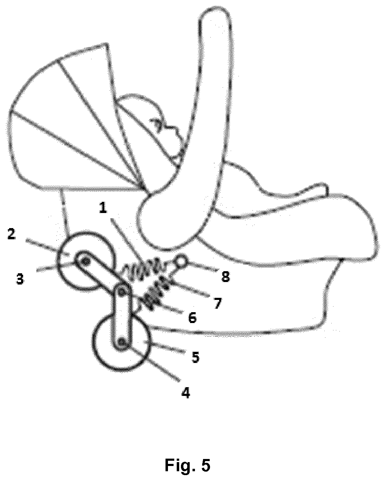

Fig. 5 uses the followings markings: 1 - spring in position when wheel is folded; 2 - folded wheel; 3 - the axis of rotation of the wheel and the element connecting the wheel with the swing arm in position when the wheel is folded; 4 - the axis of rotation of the wheel and the element connecting the wheel with the swing arm in a riding position; 5 - a wheel in a riding position; 6 - the axis of rotation of the swing arm and element connecting it with the car seat housing; 7 - a spring tensioned in a riding position 8 - an element fixing the swing arm to the car seat housing.

### Preferred embodiment of the invention

A child car seat is a well-known and necessary piece of equipment for a child while travelling. For easy and convenient transport of the car seat and the child, according to the invention, the car seat is provided with inflatable wheels mounted on the axle around which they can rotate, the axle extending at least partially through the car seat housing. The car seat housing is the part of the car seat that surrounds the backrest and seat of the car seat. The wheels may be attached to the housing independently of each other (e.g snap-on/click) and preferably with a bearing or may be attached to a common axle (and preferably also with a bearing). The wheels can be retracted in the car seat housing. Preferably, the wheels are attached to the car seat housing at the car seat and seat backrest joint or near that place. The wheels and the axis may additionally be provided with a mechanism enabling the wheels to turn. In this case, the mechanism is controlled by a grip, which is rotary connected to the handle, shape of which allows comfortable and precise control of the movement of the car seat, including - precise turning of the car seat.

In a preferred embodiment of the invention, the car seat has a straight handle, of non-adjustable length and coaxially connected to the handle. The handle is snap-on connected to the seat. In addition to or instead of such a connection the handle may be connected to the seat otherwise - e.g. using a thread, bolted with a screw etc. In each case, the handle is attached to the seat from the bottom, from the side further from the backrest, and is directed in this direction (i.e further away from the backrest - to the position where the child, seated correctly in the car seat, would look). Because the centre of gravity of the device (both empty and with a child seated in the car seat) is located between the grip and the axis of the wheels, the car seat is stable, and guiding is smooth. Ergonomic shape of the handle and the adjustable handle length allow to maintain comfortable posture of the person guiding the stroller, such as the parent, regardless of their height. Because the handle is attached to the seat away from the backrest and the handle is directed away from the backrest, the face of the parent guiding the stroller is facing the child, so the visual contact with the child is provided. Therefore, a child has a greater sense of safety and it is possible to create a bond between the child and the parent.

It is possible to modify both the shape of grip and the handle. The shape of the handle may be curved, i.e it may have curves, e.g S-shaped, which would allow the distance between the parent and the child to be reduced. Furthermore, the "S" shape can allow the lower part of the handle to be a support against the ground without having to rest the entire handle with the grip while leaving the handle at a height that makes it easy for the parent to grab it again, as well as to ensure the comfort of guiding and maintaining the correct posture of the person guiding the car seat. Moreover, the handle can have adjustable length, i.e. folding, sliding, telescopic or made up of several tubular parts connected by a elastic cord, which allows people of various heights to guide the car seat, while adjusting the position of the car seat to the ground (angle of inclination), allowing anatomically comfortable guidance of the car seat. The material of the handle according to the invention is wood, but it is possible to use a handle made of other materials such as metal, e.g aluminium or plastics.

In another embodiment of the invention, the handle can be attached, e.g, snap-on to a car seat attachment in the base of the seat on the right and/or left of the car seat. This solution changes the position of the parent relative to the car seat so that it is in line with the car seat and reduces the width of the track of the guiding person and the car seat. Then, the hand grabbing the grip may be on the side of the torso and does not need to be stretched out. Choosing the fixing side can be important for left-handed people.

The grip, straight in a basic version of the car seat, may be rotary connected with the handle or stationary, e.g using a thread or latch. The handle can be made of other materials, such as wood, rubber, plastics such as specially hardened foam or other with non-slip properties. The shape of the handle can be straight, without grooves, or adjusted to the shape of the palm when it correctly covers the grip, i.e. with grooves that imitate the shape of the fingers and the inside of the palm, and suggesting the correct grip as in the grips/handles of the handlebars in the bicycle steering wheel. The grip may also be bent beyond the handle axis, e.g towards the ground or to the side, thereby changing the position of the hand and wrist while guiding the car seat.

In yet another embodiment, the grip portion can be replaced by a handle modification, e.g, by appropriate grooving its upper portion or covering it with another material, e.g. tape or by creating anti-slip tabs on the gripping surface of e.g. made of rubber. In yet another embodiment, the end of the handle can be bent.

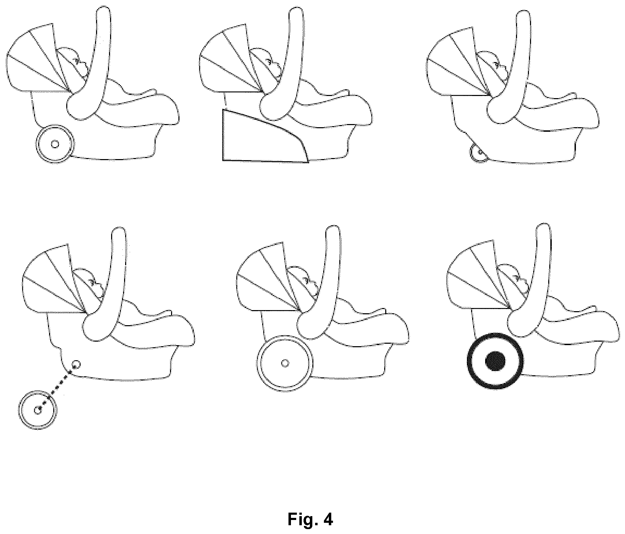

One of the embodiments of the car seat according to the invention shown in fig. 4 shows the wheels permanently attached to the bottom of the car seat housing. The mounting of the wheels in this case consists wheel hubs arranged through the tabs of the car seat housing through which the axle connecting the wheels passes. Preferably, the axis is also fitted with a differential for comfortable and precise turning of the car seat.

The wheels, in addition to being axially connected, can be placed on a foldable element that allows them to be folded and retracted between the tabs under the base of the car seat housing. In another variant the wheels can be placed on the respective element and folded on the outside of the tabs. It is also possible to mount the wheel folding mechanism in the cavity in the base of the housing and to lock the wheels inside the car seat housing. In the illustrated embodiment of the invention (fig. 4) the wheels are not retractable, and the car seat structure may include an accessory in the form of a wheel casing. Retracting the wheels between the housing base tabs, to the inside of the housing, in the housing, and other ways of retracting the wheels, protects them from damage while carrying the car seat, and protects the upholstery of the car against dirt. The car seat can have two or more wheels. In accordance with the basic embodiment of the invention, a car seat has two non-inflatable and non-retractable wheels.

Various types of wheels for strollers can be used in the design of the seat according to the invention. They may have rims, uniform or with holes, made of metal, plastic, wood etc., or spokes e.g. made of steel. Tread on the tire can be made of rubber or plastic, such as polyurethane. Another option is the use of inflatable wheels made of, for example, rubber. According to the proposed embodiment of the invention, the wheels have rims with plastic holes and are not inflatable. Depending on the embodiment of the invention, the person skilled in the art will select the type of wheels suitable for the car seat structure in terms of mechanical strength, size and weight.

Wheel-turning mechanism by turning the handle/grip along the axis (analogous to the mechanism of turning the wheels in the car).

The design of the seat is perfect for travelling for example by car or plane. Due to the preferred modification of the invention consisting in equipping the car seat with a wheel-retracting mechanism and a handle snap-on connected with the seat, it is possible to quick and easy place and remove the seat from the back seat of the car or aeroplane seat. Additionally, the design of such modified car seat makes child transport easy and safe, for example, on path necessary to take while at the airport.

Wheels attachment method shown in fig. 5 concerns at least two wheels mounted in one of the aforementioned methods, consisting in that the wheels can be further retracted for mounting e.g. in the car and put down for riding. The system includes at least one spring (1, 7) attached to the car seat housing by means of a fastening element (8) enabling the spring to rotate about an axis parallel to the common axis of the wheels. An example fastening element may be a screw or pin with a notch onto which a loop is applied on which the end of the spring is attached. In another embodiment, the screw or pin is retracted into the recess of the car seat and does not extend beyond the car seat housing.

In the embodiment shown in fig. 5, the wheels (2, 5) are not attached directly to the car seat housing, but they are attached to the housing by means of the swing arms. The swing arms are to be understood as the elongated metal or plastics elements that are fixed to the housing (6) with one end in a rotatable manner and the wheels are attached to the second end (3 or 4), and between the attachment of the wheels and the attachment of the swing arm to the housing (6), on the swing arm there is an attachment of the other end of the spring. The use of swing arms allows the wheels to be slightly offset from the car seat structure so that the wheels (2, 5) do not rub against the housing while moving. Additionally, the swing arm rests on the housing in one of two positions - when the wheels are retracted and when the wheels are in a riding position.

A riding position is the configuration of the car seat system in which the wheels (2) extend towards the ground and the spring(s) (7) press(es) the swing arm (3) substantially against the bottom of the base of the car seat.

The second position of the car seat system is the one in which the springs (7) press the swing arms (4) against the rear of the car seat housing so that the wheels (5) are partially retracted at the rear of the car seat and it is not possible to guide the car seat on the wheels (5) on the ground.

Preferably, the swing arms are attached to the car seat housing at the car seat backrest (6), symmetrically on both sides of the car seat.

The springs should preferably have a tension suitable for securely locking the wheels in one of two positions, but the tension cannot be too high, e.g above 200 N, as this would make it difficult to change the position of the wheels, especially for pregnant women and older people.

A wheel casing may extend and retract inside the car seat housing.

One-handed guiding of the car seat makes it possible to use the other hand freely - e.g. to open the door, use the phone, carrying a suitcase, dog or another child at the same time with the other hand. Particularly while travelling, the eye contact of the parent and the child is very important, also for security reasons.

## Claims

1. A child car seat with a housing that surrounds the backrest and a seat and a handle allowing to guide the car seat, having
a) at least two wheels (2, 5) mounted on an axis around which they can rotate, the axis extending at least partly through the car seat housing,
b) the handle with a grip for pushing the car seat in front of oneself on the ground, wherein the handle with the grip is a single stick-shaped element
**characterized in that**
said handle with the grip is mounted to the seat of the car seat, from below, further away from the backrest and directed in this direction,
the handle being so configured and located relative to the axis that in normal use the centre of gravity of the car seat with a handle is between the handle grip and the axis.

2. A car seat according to claim 1, **characterized in that** the wheels (2, 5) are mounted to the seat housing near the seat and seat backrest joint.

3. A car seat according to claim 1 or 2, **characterized in that** the wheels (2, 5) have bearings.

4. A car seat according to claim 1, 2 or 3, **characterized in that** the wheels (2, 5) are mounted in the housing by a snap-on mounting, preferably each of them separately.

5. A car seat according to claim 1, 2 or 3, **characterized in that** the wheels (2, 5) are mounted on a common axis.

6. A car seat according to claim 5, **characterized in that** the wheels (2, 5) are located on a common axis with a differential, with each wheel being connected to the axis with the homokinetic joint and the axis being provided with a wheel-turning mechanism which is connected to the handle and/or grip.

7. A car seat according to claim 6, **characterized in that** the handle is rotary mounted to the car seat, while inside the handle there are elements connecting the rotating grip with a wheel-turning mechanism.

8. A car seat according to any one of the preceding claims, **characterized in that** the handle is connected to the car seat detachably, especially by snap-on, press fit, a thread or with an additional fastener such as a screw, bolt or pin.

9. A car seat according to any one of the preceding claims, **characterized in that** the handle is mounted closer to the right or left side of the car seat.

10. A car seat according to any one of the preceding claims, **characterized in that** the handle is selected from a group comprising: a straight, uniform handle, preferably made of one piece of material; folding handle made of several segments, connected by a spring line placed inside; folding telescopic handle; folding unscrewing handle; handle extended from the inside of the seat housing; like in in suitcases.

11. A car seat according to any one of the preceding claims, **characterized in that** the handle extends substantially perpendicular to the axis around which the wheels (2, 5) can rotate.

12. A car seat according to any one of the preceding claims, **characterized in that** the grip extends substantially along the handle.

13. A car seat according to any one of the preceding claims, **characterized in that** it is additionally equipped with a wheel casing.

14. A car seat according to any one of the preceding claims, **characterized in that** the wheels (2, 5) are retractable into the housing of the car seat.

15. A car seat according to any one of the preceding claims, **characterized in that** the wheels (2, 5) have inflatable tires.

## Patentansprüche

1. Ein Kinderautositz mit einem Gehäuse, das die Rückenlehne umgibt, und einem Sitzteil und einem Griff, der die Führung des Autositzes ermöglicht, mit
a) mindestens zwei Rädern (2, 5), die auf einer Achse montiert sind, um die sie sich drehen können, wobei die Achse sich zumindest teilweise durch das Autositzgehäuse erstreckt,
b) der Griff mit einem Greifteil zum Schieben des Autositzes vor sich auf den Boden, wobei der Griff mit dem Greifteil ein einzelnes stabförmiges Element ist, **dadurch gekennzeichnet, dass**
der genannte Griff mit dem Griffteil am Sitzteil des Autositzes von unten, weiter von der Rückenlehne entfernt und in diese Richtung gerichtet angebracht ist,
wobei der Griff so konfiguriert und relativ zur Achse angeordnet ist, dass bei normaler Benutzung der Schwerpunkt des Autositzes mit einem Griff zwischen dem Griffteil und der Achse liegt.

2. Ein Autositz nach Anspruch 1, **dadurch gekennzeichnet, dass** die Räder (2, 5) am Sitzgehäuse in der Nähe der Verbindung des Sitzteils und der Sitzrückenlehne angebracht sind.

3. Ein Autositz nach Anspruch 1 bzw. 2, **dadurch gekennzeichnet, dass** die Räder (2, 5) Lager aufweisen.

4. Ein Autositz nach Anspruch 1, 2 bzw. 3, **dadurch gekennzeichnet, dass** die Räder (2, 5), vorzugsweise jeweils einzeln, in dem Gehäuse durch eine Schnappbefestigung montiert sind.

5. Ein Autositz nach Anspruch 1, 2 oder 3, **dadurch gekennzeichnet, dass** die Räder (2, 5) auf einer gemeinsamen Achse montiert sind.

6. Ein Autositz nach Anspruch 5, **dadurch gekennzeichnet, dass** die Räder (2, 5) auf einer gemeinsamen Achse mit einem Differential angeordnet sind, wobei jedes Rad mit der Achse mit dem homokinetischen Gelenk verbunden ist und die Achse mit einem Raddrehmechanismus versehen ist, der mit dem Griff und/oder dem Griffteil verbunden ist.

7. Ein Autositz nach Anspruch 6, **dadurch gekennzeichnet, dass** der Griff drehbar am Autositz angebracht ist, während sich im Inneren des Griffes Elemente befinden, die den Drehgriff mit einem Raddrehmechanismus verbinden.

8. Ein Autositz nach Anspruch nach einem der vorstehenden Ansprüche, **dadurch gekennzeichnet, dass** der Griff mit dem Autositz lösbar verbunden ist, insbesondere durch Schnappen, Presspassung, ein Gewinde oder mit einem zusätzlichen Befestigungsmittel wie einer Schraube, einem Bolzen oder einem Stift.

9. Ein Autositz nach Anspruch nach einem der vorstehenden Ansprüche, **dadurch gekennzeichnet, dass** der Griff näher an der rechten oder linken Seite des Autositzes angebracht wird.

10. Ein Autositz nach Anspruch nach einem der vorstehenden Ansprüche, **dadurch gekennzeichnet, dass** der Griff aus einer Gruppe ausgewählt wird, die Folgendes umfasst: einen geraden, einheitlichen Griff, vorzugsweise aus einem Stück Material; Klappgriff aus mehreren Segmenten, die durch eine innen liegende Federleitung verbunden sind; klappbarer Teleskopgriff; klappbarer Ausdrehgriff; aus der Innenseite des Sitzgehäuses herausgezogener Griff; wie bei Koffern.

11. Ein Autositz nach Anspruch nach einem der vorstehenden Ansprüche, **dadurch gekennzeichnet, dass** der Griff im Wesentlichen senkrecht zu der Achse verläuft, um die sich die Räder (2,5) drehen können.

12. Ein Autositz nach Anspruch nach einem der vorstehenden Ansprüche, **dadurch gekennzeichnet, dass** der Griffteil im Wesentlichen entlang des Griffs verläuft.

13. Ein Autositz nach Anspruch nach einem der vorstehenden Ansprüche, **dadurch gekennzeichnet, dass** es zusätzlich mit einem Radkasten ausgestattet ist.

14. Ein Autositz nach Anspruch nach einem der vorstehenden Ansprüche, **dadurch gekennzeichnet, dass** die Räder (2,5) in das Gehäuse des Autositzes einziehbar sind.

15. Ein Autositz nach Anspruch nach einem der vorstehenden Ansprüche, **dadurch gekennzeichnet, dass** die Räder (2,5) aufblasbare Reifen haben.

## Revendications

1. Un siège de voiture pour enfant comportant un boîtier qui entoure le dossier et un siège et une poignée permettant de guider le siège de voiture, ayant
a) au moins deux roues (2, 5) montées sur un axe autour duquel elles peuvent tourner, l'axe s'étendant au moins en partie à travers le boîtier de siège de voiture,
b) la poignée avec un appui pour pousser le siège de voiture devant soi sur le sol, la poignée avec l'appui étant un seul élément en forme de bâton **caractérisé en ce que**
ladite poignée avec l'appui est montée sur le siège de voiture, par le bas, plus à l'opposé du dossier et dirigée dans cette direction,
la poignée étant configurée et située par rapport à l'axe de sorte qu'en utilisation normale le centre de gravité du siège de voiture avec une poignée est entre l'appui de poignée et l'axe.

2. Un siège de voiture selon la revendication 1, **caractérisé en ce que** les roues (2, 5) sont montées sur le boîtier de siège près du joint du siège et du dossier de siège.

3. Un siège de voiture selon la revendication 1 ou 2, **caractérisé en ce que** les roues (2, 5) ont des roulements.

4. Un siège de voiture selon la revendication 1, 2 ou 3, **caractérisé en ce que** les roues (2, 5) sont montées dans le boîtier par encliquetage, de préférence chacune séparément.

5. Un siège de voiture selon la revendication 1, 2 ou **3,caractérisé en ce que** les roues (2, 5) sont montées sur un axe commun.

6. Un siège de voiture selon la revendication **5,caractérisé en ce que** les roues (2, 5) sont situées sur un axe commun avec un différentiel, chaque roue étant reliée à l'axe avec le joint homocinétique et l'axe étant pourvu d'un mécanisme de rotation des roues qui est relié à la poignée et/ou à l'appui.

7. Un siège de voiture selon la revendication 6, **caractérisé en ce que** la poignée est montée rotative sur le siège de voiture, tandis qu'à l'intérieur de la poignée il y a des éléments reliant l'appui rotatif à un mécanisme de rotation des roues.

8. Un siège de voiture selon l'une quelconque des revendications précédentes, **caractérisé en ce que** la poignée est reliée au siège de voiture de manière amovible, notamment par encliquetage, ajustement serré, filetage ou avec un élément de fixation supplémentaire tel qu'une vis, un boulon ou une goupille.

9. Un siège de voiture selon l'une quelconque des revendications précédentes, **caractérisé en ce que** la poignée est montée plus près du côté droit ou gauche du siège de voiture.

10. Un siège de voiture selon l'une quelconque des revendications précédentes, **caractérisé en ce que** la poignée est choisie dans un groupe comprenant: une poignée droite et uniforme, de préférence constituée d'une seule pièce de matériau; poignée pliante constituée de plusieurs segments, reliés par une ligne à ressort placée à l'intérieur; poignée télescopique pliante; poignée de dévissage pliante; poignée prolongée à partir de l'intérieur du boîtier du siège; comme dans des valises.

11. Un siège de voiture selon l'une quelconque des revendications précédentes, **caractérisé en ce que** la poignée s'étend sensiblement perpendiculairement à l'axe autour duquel les roues (2,5) peuvent tourner.

12. Un siège de voiture selon l'une quelconque des revendications précédentes, **caractérisé en ce que** l'appui s'étend sensiblement le long de la poignée.

13. Un siège de voiture selon l'une quelconque des revendications précédentes, **caractérisé en ce que** il est en outre équipé d'un carter de roue.

14. Un siège de voiture selon l'une quelconque des revendications précédentes, **caractérisé en ce que** les roues (2,5) sont rétractables dans le boîtier du siège de voiture.

15. Un siège de voiture selon l'une quelconque des revendications précédentes, **caractérisé en ce que** les roues (2,5) ont des pneus gonflables.
